# EUROPÄISCHE PATENTSCHRIFT

(11) **EP 2 916 102 B1**
(45) Veröffentlichungstag und Bekanntmachung des Hinweises auf die Patenterteilung: **23.10.2019**
(21) Anmeldenummer: 15000550.2
(22) Anmeldetag: 26.02.2015
(51) Int. Cl.: H04N 7/18, G06T 3/40, B60R 1/00, G01B 11/00

(54) **VERFAHREN ZUR MASSSTABSKORREKTEN SKALIERUNG EINER AUFNAHME EINES KAMERASENSORS UND SYSTEM**
METHOD FOR PRECISE SCALING OF AN IMAGE OF A CAMERA SENSOR AND SYSTEM
PROCÉDÉ DE CADRAGE À L'ÉCHELLE D'UNE PRISE DE VUE D'UN CAPTEUR DE CAMÉRA ET SYSTÈME

(30) Priorität: 05.03.2014 DE 102014003221
(43) Veröffentlichungstag der Anmeldung: 09.09.2015
(73) Patentinhaber: AUDI AG, 85045 Ingolstadt (DE)
(72) Erfinder: Schindler, Andreas, DE - 85055 Ingolstadt (DE); Göhrle, Christoph, DE - 85049 Ingolstadt (DE); Sawodny, Oliver, DE - 70186 Stuttgart (DE)
(74) Vertreter: Reichert, Thomas Klaus

(56) Entgegenhaltungen:
- EP-B1- 0 722 601
- DE-A1-102008 034 594
- DE-A1-102010 021 383
- JP-A- 2002 098 764
- JP-A- 2004 053 278
- US-A1- 2012 140 061

## Beschreibung

Die vorliegende Erfindung betrifft ein Verfahren zur maßstabskorrekten Skalierung einer Aufnahme eines Kamerasensors sowie ein System mit einem Kamerasensor, mindestens einem maßstabskorrekten Sensor und einer Recheneinheit.

In Fahrzeugen kommen häufig Kamerasensoren zum Einsatz, mit denen eine Umgebung eines jeweiligen Fahrzeugs erfasst und ggf. für weitere Berechnungen bzw. Dienste verwendet wird. Ein Nachteil bei einer Verwendung eines Kamerasensors ist, dass Kamerasensoren in der Regel eine jeweilige Umgebung nicht maßstabskorrekt, d. h. in einem korrekten Größenverhältnis jeweiliger Gegenstände in der Umgebung zueinander darstellen. So kann bspw. ein Modellauto auf einer Modellstraße einen vergleichbaren Eindruck erzeugen, wie ein entsprechendes Kraftfahrzeug auf einer echten Straße des öffentlichen Straßenverkehrs. Eine Möglichkeit, derartige geometrische Bedingungen zu unterscheiden, besteht im Ermitteln von Tiefeninformationen.

Um Tiefeninformationen einer jeweiligen Umgebung zu ermitteln, sind im Stand der Technik Verfahren offenbart, die auf einer dreidimensionalen Vermessung einer jeweiligen Umgebung beruhen. So offenbart bspw. die Druckschrift DE 10 2007 037 131 A1 eine dreidimensionale Vermessung einer Oberfläche mittels einer Reflektanzfunktion. Dabei wird mittels einer linken und einer rechten Kamera eine Tiefenkarte von einer mit einer Punktlichtquelle beleuchteten Oberfläche erzeugt. Dabei gewonnene Koordinaten werden mit Messwerten einer jeweils anderen Kamera transformiert und mit einem realen Bild verglichen, um dadurch ein korrigiertes Tiefenprofil zu erhalten.

Die Druckschrift DE 10 2011 082 881 A offenbart hingegen ein Verfahren zum Darstellen von Umgebungsinformationen mit zumindest einer Fahrzeugkamera, die eine räumlich aufgenommene erste Bildinformation in eine zweite Bildinformation transformiert. Dazu werden zwei unterschiedliche Kamerapositionen verwendet. Ferner kann ein Laser als zusätzliche Lichtquelle zum Einsatz kommen.

In der japanischen Druckschrift JP 2002 098 764 A wird ein Verfahren zum Vergleichen zweier Bilder offenbart.

Die japanische Druckschrift JP 2004 053278 A betrifft ein Verfahren zum Darstellen eines Fahrzeugs in einem Bild.

Ein Verfahren zum Verfolgen eines in einem Bild markierten Objekts ist in der US-amerikanischen Druckschrift US 2012 014 0061 A1 offenbart.

Aus der EP 0 722 601 B1 geht ein elektrooptisches Sichtsystem hervor, das ein optisch aufgenommenes Bild durch computergenerierte Informationen ergänzt. Die Informationen sind in einer Datenbank hinterlegt und werden durch Bestimmung der Position und Blickrichtung des Sichtsystems ausgewählt.

Die DE 10 2008 034 594 A1 betrifft ein Verfahren zur Information eines Insassen eines Fahrzeuges, bei dem durch Aufnahmemittel des Fahrzeugs wenigstens zwei Bilder erzeugt werden, welche unterschiedliche Fahrbahnabschnitte der Fahrbahnebene in der Umgebung des Fahrzeugs enthalten. Aus den Bildern wird eine Darstellung generiert, in der die Bilder auf eine virtuelle Fahrbahnebene abgebildet werden, wobei die virtuelle Fahrbahnebene perspektivisch wiedergegeben wird.

Die DE 10 2010 021 383 A1 lehrt ein Verfahren zur automatisierten Erfassung von Objekten mittels eines sich bewegenden Fahrzeugs, das mit einer Messanordnung ausgerüstet ist. Das Verfahren umfasst die Aufnahme zumindest eines Bewegtbildes; die Erfassung und Korrektur von Positionsdaten und einem Anstandsprofil; die Speicherung des mit den korrigierten Positionsdaten und dem Abstandsprofil versehenen Bewegtbildes und die Bestimmung der räumlichen Position und der Abmessungen eines derartig erfassten Objektes.

Um mittels einer Kamera bzw. eines Kamerasensors, d. h. einer Monokamera, ein metrisches Signal zu ermitteln, wird häufig eine metrische Größe, wie bspw. eine Kamerahöhe oder eine Fahrzeuggeschwindigkeit verwendet. Ist die metrische Größe, wie bspw. die Fahrzeuggeschwindigkeit, um bspw. 10 % falsch, sind entsprechend auch alle mittels der metrischen Größe umgerechneten Werte ebenfalls um 10 % falsch. Eine Monokamera umfasst, im Gegensatz zu einer Stereokamera, nur einen Bildsensor und ist entsprechend nicht in der Lage, Tiefeninformationen ohne zusätzliche Umgebungsdetails zu errechnen.

Vor diesem Hintergrund wird ein Verfahren zur maßstabskorrekten Skalierung gemäß Patentanspruch 1 sowie ein System mit einem Kamerasensor gemäß Patentanspruch 10 vorgestellt.

Demzufolge betrifft die vorliegende Erfindung ein Verfahren zum effektiven und zielgerichteten Kombinieren eines maßstabskorrekten Sensors, der Entfernungen einer jeweiligen Umgebung maßstabskorrekt in einem metrischen System misst und einem Kamerasensor, der die jeweilige Umgebung maßstabsblind misst.

Für eine Kombination jeweiliger Sensoren bzw. Sensordaten wird eine diskrete Karte einer jeweiligen Umgebung, wie bspw. einer Straße, erstellt und entsprechend einer aktuellen Fahrzeuggeschwindigkeit verschoben, so dass immer eine Vorausschau von bspw. -15 bis +15 m um ein jeweiliges Fahrzeug besteht.

Unter einer Karte ist im Kontext der vorgestellten Erfindung eine Darstellung von mittels eines Sensors erfasster Daten in einem Koordinatensystem zu verstehen, wobei die Karte vorzugsweise in einem 2-dimensionalen Koordinatensystem angelegt ist. Dabei kann auch eine bereits existierende Karte mit Daten aus einem Sensor zu einer aktuellen Karte fusioniert werden.

Es ist vorgesehen, dass mit einer auf dem maßstabskorrekten Sensor basierenden Referenzgröße ein Signal bzw. ein Abbild der jeweiligen Umgebung, die durch den Kamerasensor erfasst wurde und die um einen gewissen Faktor im Maßstab falsch ist, korrigiert werden kann. Dazu wird die Referenzgröße bspw. als Co-Faktor mit jeweiligen Messwerten des Kamerasensors verrechnet, d. h. bspw. multipliziert.

Unter einer Referenzgröße ist im Kontext der vorliegenden Erfindung jedes Maß zur Berechnung einer maßstabskorrekten Skalierung, insbesondere eine Entfernung zu einem Zielobjekt zu verstehen.

Um maßstabsblinde Messwerte des Kamerasensors mit Messwerten des maßstabskorrekten Sensors abzugleichen, ist vorgesehen, in einem ersten Schritt die von dem maßstabskorrekten Sensor erfassten Messwerte bzw. Daten umzurechnen und entsprechende Koordinaten relativ zu einer Bezugslinie zu ermitteln sowie die ermittelten Koordinaten in die Karte einzutragen. In einem zweiten Schritt werden die von dem Kamerasensor erfassten Daten an eine aktuelle Position des Fahrzeugs, bspw. durch Multiplikation mit einem Faktor angepasst. Im Anschluss daran werden die von dem Kamerasensor ermittelten Messwerte so lange skaliert, d. h. bspw. mit verschiedenen Faktoren verrechnet, bis ein Gütekriterium, wie bspw. eine quadrierte Differenz zwischen einem mittels der Daten des Kamerasensors erzeugten Höhenprofil und einem mittels der Daten des maßstabskorrekten Sensors erzeugten Höhenprofil minimal wird. Falls mittels der Skalierung eine signifikante Verbesserung, d. h. eine geringere quadratische Differenz entsteht, so sind die aus der jeweiligen Skalierung hervorgegangenen Werte für eine Fusion der Daten der jeweiligen Sensoren zu verwenden, d. h. für eine Berechnung eines gewichteten Mittels zwischen den Messwerten der jeweiligen Sensoren zur Verfügung zu stellen.

In einer weiteren möglichen Ausgestaltung des erfindungsgemäßen Verfahrens ist vorgesehen, dass als maßstabskorrekter Sensor ein gepulster Laser gewählt wird.

Laser haben sich in der Vergangenheit bereits als geeignete Vorrichtungen zur Erfassung von Distanzen bewährt, sie sind robust und zuverlässig und ermöglichen eine Messung in einem zeitlichen Rahmen, der für das erfindungsgemäße Verfahren geeignet ist. Mittels eines Festkörper- oder Diodenlasers können bspw. über Laufzeitmessung oder über eine jeweilige Phasenlage des jeweiligen Lasers Distanzen vermessen werden.

Bei einer Laufzeitmessung mittels eines Pulslasers bzw. gepulsten Lasers wird ein Lichtpuls ausgesandt und diejenige Zeit gemessen, die der Lichtpuls benötigt, um von einem Ziel reflektiert zu werden. Durch Messen dieser Zeit, der sogenannten "Laufzeit", ist es möglich, als Funktion von Lichtgeschwindigkeit und "Laufzeit", eine Distanz zwischen dem Laser und dem den Lichtpuls reflektierenden Ziel zu ermitteln. Ein Vorteil einer Laufzeitmessung ist deren geringe Reaktionszeit.

Um die Karte an jeweilige Referenzwerte des maßstabskorrekten Sensors anzupassen, d. h. Messwerte des maßstabskorrekten Sensors in die Karte einzubinden, ist vorgesehen, dass die Messwerte in Relation zu einer Bezugslinie in die Karte eingezeichnet werden, so dass ggf. eine Korrektur der Karte und/oder jeweiliger zur Ermittlung der Karte verwendeter Messwerte des Kamerasensors erfolgen kann.

In einer weiteren möglichen Ausgestaltung des erfindungsgemäßen Verfahrens ist vorgesehen, dass die Bezugslinie, zu der jeweilige Messwerte der jeweiligen Sensoren in Relation eingezeichnet werden, eine sensorfeste Bezugslinie ist.

Unter einer sensorfesten Bezugslinie ist im Kontext der vorgestellten Erfindung eine Bezugslinie zu verstehen, die fest an einem jeweiligen Sensor, bspw. zur Kalibrierung, angeordnet bzw. auf diesen aufgebracht ist.

In einer weiteren möglichen Ausgestaltung des erfindungsgemäßen Verfahrens ist vorgesehen, dass die Bezugslinie über jeweilige kleinste Fehlerquadrate von Messwerten des maßstabskorrekten Sensors ermittelt wird.

Um eine für eine Relation jeweiliger Messwerte der jeweiligen Sensoren zueinander zu verwendende Bezugslinie an jeweilige Umstände bzw. Gegebenheiten anzupassen, ist es vorteilhaft, dass die Bezugslinie mittels jeweiliger kleinster Fehlerquadrate von Messwerten mindestens eines Sensors gebildet wird. Durch Bildung der Bezugslinie unter Berücksichtigung aktuell ermittelter Messwerte mindestens eines Sensors können ggf. auftretende Störvariablen berücksichtigt und dadurch kompensiert werden.

In einer weiteren möglichen Ausgestaltung des erfindungsgemäßen Verfahrens ist vorgesehen, dass die Karte und jeweilige aktuelle Messwerte in Abhängigkeit einer jeweiligen Fahrzeugbewegung verschoben werden.

Um jeweilige Messwerte an eine geänderte Fahrzeugposition anzupassen, ist es zwingend erforderlich, dass die Messwerte, die zur Generierung der Karte verwendet werden, bspw. durch Verrechnung mit einem Faktor, wie bspw. einer Längs- und/oder einer Querkoordinate sowie einer Fahrzeuggeschwindigkeit verrechnet werden, so dass die Karte und/oder die jeweiligen aktuellen Messwerte stets an eine aktuelle Position des jeweiligen Fahrzeugs angepasst sind und dadurch in einem festen Fahrzeugkoordinatensystem vorliegen.

In einer weiteren möglichen Ausgestaltung des erfindungsgemäßen Verfahrens ist vorgesehen, dass ein Modell sowohl in die Karte als auch in jeweilige Messwerte des Kamerasensors sowie des maßstabskorrekten Sensors eingepasst wird, wobei jeweilige Parameter des Modells so verändert werden, dass sowohl aus dem in die Messwerte eingepassten Modell als auch aus dem in die Karte eingepassten Modell resultierende Kurven möglichst deckungsgleich sind.

Um ein ggf. mehrfaches Reskalieren mit entsprechenden Skalierungsfaktoren sowie ein damit verbundenes, ggf. wiederholtes Testen bzw. Probieren zu vermeiden, kann ein Modell, wie bspw. ein Polynom verwendet werden, das in eine jeweilige Karte sowie in jeweilige Messwerte des Kamerasensors und/oder des maßstabskorrekten Sensors eingepasst wird. Dazu werden jeweilige Parameter des Modells so verändert, dass jeweilige Kurven des Modells der Karte bzw. der jeweiligen Messwerte möglichst deckungsgleich aufeinander liegen. Eine derartige Deckung kann bspw. über ein Optimierungsproblem berechnet werden, wobei ein lineares Gleichungssystem gelöst wird, um jeweilige Parameter zu bestimmen. Falls durch das Modell bzw. eine Berechnung mit dem Modell eine signifikante Verbesserung der Karte zu erwarten ist, so kann, basierend auf der berechneten Skalierung von Parametern der Karte, ein jeweiliges Signal, d. h. Messwerte der Sensoren mit der Karte gemittelt bzw. akkumuliert werden, um eine jeweilige Genauigkeit einer jeweiligen Messung zu erhöhen bzw. ein Sensorrauschen zu minimieren. Falls durch das Skalieren keine signifikante Verbesserung eintritt, so ist vorgesehen, dass jeweilige ursprüngliche Kartenparameter beibehalten werden.

Ferner betrifft die vorliegende Erfindung ein System mit einem Kamerasensor und mindestens einem maßstabskorrekten Sensor sowie einer Recheneinheit, wobei die Recheneinheit dazu konfiguriert ist, auf Grundlage jeweiliger Messwerte des Kamerasensors eine Karte zu erzeugen und die Karte in Abhängigkeit einer aktuellen Fahrzeuggeschwindigkeit zu verschieben, sowie die Karte durch eine Verrechnung der Messwerte des Kamerasensors mit Messwerten des mindestens einen maßstabskorrekten Sensors entsprechend maßstabskorrekt zu skalieren.

Das erfindungsgemäße System dient insbesondere zur Anwendung des erfindungsgemäßen Verfahrens und ermöglicht eine maßstabsgenaue bzw. maßstabskorrekte Orientierung in einer jeweiligen Umgebung mittels eines Kamerasensors und eines Lasers.

Der Laser kann an jeder technisch geeigneten Position in bzw. an dem erfindungsgemäßen System angeordnet sein, insbesondere in einer Motorhaube oder an einem Seitenteil, wie bspw. einem Rückspiegel oder einer Tür.

Weitere Vorteile und Ausgestaltungen der Erfindung ergeben sich aus der Beschreibung sowie den beiliegenden Zeichnungen.

Es versteht sich, dass die voranstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung ist anhand von Ausführungsformen in den Zeichnungen schematisch dargestellt und wird unter Bezugnahme auf die Zeichnungen schematisch und ausführlich beschrieben.
Figur 1 zeigt eine mögliche Ausgestaltung einer Fusion von Daten einer Monokamera mit Daten eines maßstabskorrekten Sensors.
Figur 2 zeigt eine mögliche Ausgestaltung des erfindungsgemäßen Systems mit einer Monokamera und einem maßstabskorrekten Sensor.
Figur 3 zeigt eine mögliche Höhenkarte mit Messwerten eines Kamerasensors und Messwerten eines maßstabskorrekten Sensors.

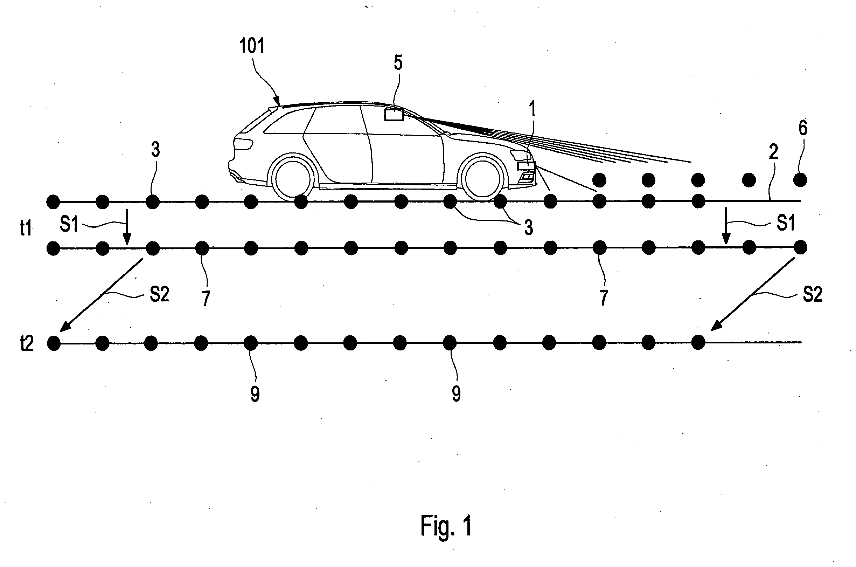

Der in Figur 1 dargestellte Ablauf des erfindungsgemäßen Verfahrens in einem Fahrzeug 101 zeigt, wie jeweilige bspw. von einer in einem Fahrzeug angeordneten Monokamera 5 zur Generierung einer Karte gesammelte Monodaten 6 mit Messdaten 3 eines Lasers 1, die an einer sensorfesten Bezugslinie 2 ausgerichtet wurden, zu skalierten Werten 7 in einem Verfahrensschritt S1 zu einem Zeitpunkt t1 fusioniert und anschließend in einem Verfahrensschritt S2 zu einem Zeitpunkt t2 relativ zu einer aktuellen Position des Fahrzeugs 101 verschoben werden.

Um jeweilige Monodaten 6 der Karte der aktuellen Umgebung mit Messdaten 3 des Lasers 1 zu skalieren und dadurch eine maßstabskorrekte Karte, bspw. eine Höhenkarte einer aktuellen Umgebung des Fahrzeugs 101 zu erhalten, müssen die Monodaten 6, die ggf. zu einem gegenüber den Messdaten 3 des Lasers 1 verzögerten Zeitpunkt erfasst wurden, angepasst werden. Dazu können die Monodaten 6 bspw. solange skaliert werden, bis eine quadrierte Differenz zwischen Monodaten 6 und Messdaten 3 minimal wird. Dabei wird stets geprüft, ob durch die Skalierung eine signifikante Verbesserung entsteht, d. h. die Differenz zwischen Monodaten 6 und Messdaten 3 kleiner wird. Falls eine signifikante Verbesserung entsteht, d. h. die Differenz kleiner wird, werden die derart skalierten und angepassten Monodaten 6 mit Messdaten 3 des Lasers 1 zu skalierten Werten 7 fusioniert, bspw. gemittelt.

Eine weitere Möglichkeit zur Fusion von Messdaten 3 des Lasers 1 und Monodaten 6 der Monokamera 5 bietet ein Modell, wie bspw. ein Polynom, das sowohl an die Messdaten 3 des Lasers 1 als auch an die Monodaten 6 der Monokamera 5 angepasst wird. Dabei werden jeweilige Parameter des Modells so angepasst, dass entsprechende Kurven des Modells für Messdaten 3 und Monodaten 6 bestmöglich aufeinander liegen. Dazu kann bspw. ein Optimierungsproblem herangezogen werden, bei dem bspw. ein lineares Gleichungssystem gelöst wird.

Um die skalierten Werte 7 an eine Geschwindigkeit des Fahrzeugs 101 anzupassen, werden die skalierten Werte 7 permanent aktualisiert, d. h. Daten, die zu einem Zeitpunkt t1 durch die Monokamera 5 bzw. den Laser 1 gesammelt wurden, werden durch einen zweiten Verfahrensschritt S2 bspw. in Abhängigkeit einer aktuellen Fahrzeuggeschwindigkeit so verschoben, dass entsprechende verschobene und skalierte Werte 9 sich zu einem Zeitpunkt t2 in einem definierten Bereich um das Fahrzeug 101 befinden. Werden jeweilige skalierte und verschobene Werte 9 bspw. horizontal so verschoben, dass diese nicht mehr innerhalb des definierten Bereichs liegen, so werden diese gelöscht.

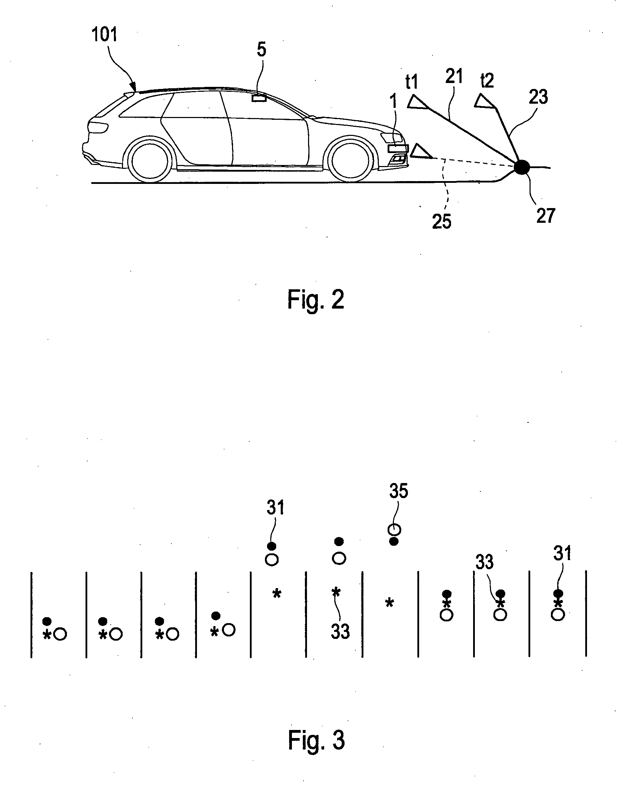

Die in Figur 2 gezeigte Darstellung des Fahrzeugs 101 mit der darauf angeordneten Monokamera 5 deutet durch die durchgezogenen Linien 21 und 23 eine maßstabsblinde Entfernungsmessung der Monokamera 5 zu jeweiligen Zeitpunkten t1 und t2 an. Der ferner auf dem Fahrzeug 101 angeordnete Laser 1 liefert, wie durch die gestrichelte Linie 25 angedeutet, eine stets aktuelle maßstabskorrekte Messung einer jeweiligen Distanz zu einem Objekt 27, bspw. in einem metrischen System. Da unter ausschließlicher Verwendung einer Aufnahme der Monokamera 5 keine maßstabskorrekte Abstandsmessung möglich ist, wird eine mittels der Monokamera 5 ermittelte Karte mit maßstabskorrekten Messwerten des Lasers 1 skaliert, d. h. fusioniert. Der Laser 1 ist mittels einer Laufzeitmessung eines jeweiligen durch den Laser 1 generierten Lichtpulses in der Lage, Entfernungen sehr genau zu messen. Anhand einer über den Laser 1, bspw. im metrischen System definierten Entfernung, ist es möglich, die durch die Monokamera 5 ermittelte Karte maßstabskorrekt zu skalieren.

Durch eine Fusion der Messwerte der beiden Sensoren kann eine maßstabskorrekte Karte einer jeweiligen Umgebung erzeugt und einem Fahrer zur Verfügung gestellt werden.

Die Fusion von Sensorwerten der beiden Sensoren "Monokamera 5" und "Laser 1" kann wahlweise über ein gewichtetes Mittel der jeweiligen Sensorwerte oder über eine geeignete Modellbildung erfolgen. Im Falle einer Modellbildung wird ein mathematisches Modell, wie bspw. ein Polynom zunächst in die auf Monodaten 6 der Monokamera 5 beruhende Karte und anschließend in die Messdaten 3 des Lasers 1 eingepasst und anschließend jeweilige Parameter des Modells so verändert, dass aus dem Modell resultierende Kurven für Sensorwerte von Monokamera 5 und Laser 1 möglichst deckungsgleich werden. Um die jeweiligen Kurven zur Deckung zu bringen kann bspw. ein Optimierungsproblem mittels eines linearen Gleichungssystems gelöst werden, so dass jeweilige Parameter des Modells bestimmt werden können.

Figur 3 zeigt eine Höhenkarte, in welche Datenpunkte 31, die von dem Laser 1 gesammelt wurden, eingetragen sind. Datenpunkte 33, die von der Monokamera 5 ermittelt wurden, werden gedreht und vertikal verschoben, bis sie mit der Karte übereinstimmen. Sodann werden sie zu Datenpunkten 35 skaliert, bis sie am besten in die bereits erstellte Karte passen, d. h. bestmöglich zu von dem Laser 1 ermittelten Tiefeninformationen passen. Um ein Sensorrauschen der jeweiligen Sensoren zu minimieren, kann es sinnvoll erscheinen, dass jeweilige Datenpunkte akkumuliert bzw. gemittelt werden.

## Patentansprüche

1. Verfahren zur maßstabskorrekten Skalierung einer Karte, worin die Karte mittels einer Aufnahme eines Kamerasensors (5) an einem Fahrzeug (101) erstellt wird, **dadurch gekennzeichnet, dass** die Karte mittels einer durch einen maßstabskorrekten Sensor (1) bereitgestellten Referenzgröße maßstabskorrekt skaliert und in Abhängigkeit einer aktuellen Fahrzeuggeschwindigkeit verschoben wird.

2. Verfahren nach Anspruch 1, bei dem als maßstabskorrekter Sensor (1) ein gepulster Laser gewählt wird.

3. Verfahren nach Anspruch 1 oder 2, bei dem die Karte von einem Bereich vor und hinter dem Fahrzeug (101) erzeugt wird, wobei jeweilige von dem maßstabskorrekten Sensor (1) ermittelte Messwerte in eine Koordinate umgerechnet und in Relation zu einer Bezugslinie in die Karte eingetragen werden.

4. Verfahren nach Anspruch 3, bei dem die Bezugslinie sensorfest ist.

5. Verfahren nach Anspruch 3, bei dem die Bezugslinie über jeweilige kleinste Fehlerquadrate der Messwerte des maßstabskorrekten Sensors (1) ermittelt wird.

6. Verfahren nach einem der voranstehenden Ansprüche, bei dem die Karte und jeweilige aktuelle Messwerte in Abhängigkeit einer jeweiligen Fahrzeugbewegung verschoben werden.

7. Verfahren nach einem der voranstehenden Ansprüche, bei dem die Karte solange skaliert wird, bis ein Gütemaß auf Grundlage einer Verrechnung von Sensordaten des Kamerasensors (5) und des maßstabskorrekten Sensors (1) minimal wird.

8. Verfahren nach Anspruch 7, bei dem als Gütemaß eine quadrierte Differenz von Sensordaten des Kamerasensors (5) und des maßstabskorrekten Sensors (1) gewählt wird.

9. Verfahren nach einem der Ansprüche 1 bis 6, bei dem ein Modell sowohl in die auf Messwerten des Kamerasensors (5) beruhende Karte als auch in Messwerte des maßstabskorrekten Sensors (1) eingepasst wird, wobei jeweilige Parameter des Modells so verändert werden, dass aus den jeweiligen Messwerten resultierende Kurven möglichst deckungsgleich sind.

10. System mit einem Kamerasensor (5) an einem Fahrzeug (101), mindestens einem maßstabskorrekten Sensor (1) und einer Recheneinheit, die dazu konfiguriert ist, auf Grundlage jeweiliger Messwerte des Kamerasensors (5) eine Karte zu erzeugen, **dadurch gekennzeichnet, dass** die Recheneinheit dazu konfiguriert ist, die Karte durch eine Verrechnung der Messwerte des Kamerasensors (5) mit einer durch den mindestens einen maßstabskorrekten Sensor (1) bereitgestellten Referenzgröße maßstabskorrekt zu skalieren, sowie die Karte in Abhängigkeit einer aktuellen Fahrzeuggeschwindigkeit des das System umfassenden Fahrzeugs (101) zu verschieben.

## Claims

1. Method for precise scaling of a map, wherein the map is created by means of an image of a camera sensor (5) on a vehicle (101), **characterised in that** the map is scaled precisely by means of a reference variable provided by a precise sensor (1) and is shifted as a function of a current vehicle speed.

2. Method according to claim 1, in which a pulsed laser is selected as the precise sensor(1).

3. Method according to claim 1 or 2, in which the map is created of a region in front of and behind the vehicle (101), wherein respective measured values determined by the precise sensor (1) are converted into a coordinate and are recorded on the map in relation to a reference line.

4. Method according to claim 3, in which the reference line is fixed in relation to the sensor.

5. Method according to claim 3, in which the reference line is determined by respective least square error fit of the measured values from the precise sensor (1).

6. Method according to any of the preceding claims, in which the map and respective current measured values are shifted as a function of a respective vehicle movement.

7. Method according to any of the preceding claims, in which the map is scaled until a quality measure based on a match between sensor data from the camera sensor (5) and the precise sensor (1) is minimal.

8. Method according to claim 7, in which a squared difference of sensor data from the camera sensor (5) and the precise sensor (1) is selected as quality measure.

9. Method according to any of claims 1 to 6, in which a model is adjusted to the map based on measured values from the camera sensor (5) as well as to measured values from the precise sensor (1), wherein respective parameters of the model are modified so that curves resulting from the respective measured values have the greatest possible overlap.

10. System with a camera sensor (5) on a vehicle (101), at least one precise sensor (1) and a computer unit which is configured to create a map on the basis of respective measured values from the camera sensor (5), **characterised in that** the computer unit is configured to scale the map precisely by matching the measured values from the camera sensor (5) with a reference variable provided by the at least one precise sensor (1) and to shift the map as a function of a current vehicle speed of the vehicle (101) comprising the system.

## Revendications

1. Procédé de cadrage à l'échelle d'une carte, dans lequel la carte est créée au moyen d'une prise de vue d'un capteur de caméra (5) sur un véhicule (101), **caractérisé en ce que** la carte est cadrée à l'échelle au moyen d'une valeur de référence fournie par un capteur à l'échelle (1) et est déplacée en fonction d'une vitesse actuelle du véhicule.

2. Procédé selon la revendication 1, dans lequel un laser à impulsion est sélectionné en tant que capteur à l'échelle (1).

3. Procédé selon la revendication 1 ou 2, dans lequel la carte est générée par une zone située devant et derrière le véhicule (101), dans lequel les valeurs mesurées respectives déterminées par le capteur à l'échelle (1) sont converties en coordonnées et entrées dans la carte par rapport à une ligne de référence.

4. Procédé selon la revendication 3, dans lequel la ligne de référence est fixe par rapport au capteur.

5. Procédé selon la revendication 3, dans lequel la ligne de référence est déterminée par les moindres carrés respectifs des valeurs mesurées du capteur à l'échelle (1).

6. Procédé selon l'une quelconque des revendications précédentes, dans lequel la carte et les valeurs mesurées actuelles respectives sont déplacées en fonction d'un déplacement de véhicule respectif.

7. Procédé selon l'une quelconque des revendications précédentes, dans lequel la carte est cadrée jusqu'à ce qu'une mesure de qualité basée sur une compensation de données de capteur du capteur de caméra (5) et du capteur à l'échelle (1) devienne minimum.

8. Procédé selon la revendication 7, dans lequel une différence au carré de données de capteur provenant du capteur de caméra (5) et du capteur à l'échelle (1) est sélectionnée en tant que mesure de qualité.

9. Procédé selon l'une quelconque des revendications 1 à 6, dans lequel un modèle est installé à la fois dans la carte fondée sur des valeurs de mesure du capteur de caméra (5) et des valeurs de mesure du capteur à l'échelle (1), dans lequel les paramètres respectifs du modèle sont modifiés de sorte que les courbes résultantes des valeurs de mesure coïncident autant que possible.

10. Système avec un capteur de caméra (5) sur un véhicule (101), au moins un capteur à l'échelle (1) et une unité de calcul, qui est configurée pour générer une carte sur la base de valeurs de mesure respectives du capteur de caméra (5), **caractérisé en ce que** l'unité de calcul est configurée pour cadrer à l'échelle la carte par une compensation des valeurs de mesure du capteur de caméra (5) avec une valeur de référence fournie par le au moins un capteur à l'échelle (1), ainsi que pour déplacer la carte en fonction d'une vitesse de véhicule actuelle du véhicule comprenant le système (101).
